# EUROPÄISCHE PATENTANMELDUNG

(11) **EP 4 763 464 A1**
(43) Veröffentlichungstag der Anmeldung: **24.06.2026**
(21) Anmeldenummer: 25220356.7
(22) Anmeldetag: 03.12.2025
(51) Int. Cl.: B29C 39/10, B29C 33/12, B29C 33/14, B29C 39/26

(54) **GIESSFORM**

(30) Priorität: 20.12.2024 DE 102024139212
(71) Anmelder: Schock GmbH, 94209 Regen (DE)
(72) Erfinder: Probst, Alois, 94209 Regen (DE); Müller, Markus, 94209 Regen (DE)
(74) Vertreter: Lindner Blaumeier Patent- und Rechtsanwälte

(57) **Zusammenfassung**

Gießform zur Herstellung eines eine Vorder- und eine Rückseite (35, 36) aufweisenden Gießkörpers (33)aus einer aushärtbaren Gießmasse, mit zumindest einem ersten Formteil (2) mit einer die Vorderseite (36) formenden Vorderseitenformfläche (12) und einem zweiten Formteil (3) mit einer die Rückseite (35) formenden Rückseitenformfläche (13), die zusammen einen Gießhohlraum (4) begrenzen, wobei an der Rückseitenformfläche (13) eine erste Befestigungsschnittstelle (15) und an einem Einlegeteil (16), über das am Gießkörper (33) eine Durchbrechung (37) auszubilden ist, eine zweite Befestigungsschnittstelle (17) vorgesehen ist, wobei das Einlegeteil (16) bei geschlossener Form sowohl an der Rückseitenformfläche (13) als auch an der Vorderseitenformfläche (12) anliegt, und wobei die beiden Befestigungsschnittstellen (15, 17) derart lösbar miteinander verbindbar sind, dass beim Entfernen des zweiten Formteils (3) vom ausgehärteten Gießkörper (33) die erste Befestigungsschnittstelle (15) automatisch von der zweiten Befestigungsschnittstelle (17) gelöst wird.

## Beschreibung

Die Erfindung betrifft eine Gießform zur Herstellung eines eine Vorder- und eine Rückseite aufweisenden Gießkörpers aus einer aushärtbaren Gießmasse, mit zumindest einem ersten Formteil mit einer die Vorderseite formenden Vorderseitenformfläche und einem zweiten Formteil mit einer die Rückseite formenden Rückseitenformfläche, die zusammen einen Gießhohlraum begrenzen.

Aus einer aushärtbaren Gießmasse aus einem Komposit-Werkstoff kann unter Verwendung einer geeigneten Gießform ein dreidimensional geformte Gießkörper hergestellt werden, indem die Gießmasse bei geschlossener Gießform in einen Gießhohlraum eingebracht wird, dort aushärtet und der Gießkörper nach Öffnen der Form entnommen wird. Als Gießmasse wird zumeist eine polymere Gießmasse auf Acrylat-Basis mit darin verteilten organischen und/oder anorganischen Partikeln verwendet. Ein nicht beschränkendes Beispiel für einen solchen Gießkörper ist eine Küchenspüle, die je nach Ausgestaltung und Design einen oder mehrere Beckenbereiche sowie ggf. eine oder mehrere seitliche Ablageflächen aufweist. Ein weiteres Beispiel ist eine Duschtasse, die einen ebenen Bodenabschnitt sowie einen umlaufenden Randabschnitt aufweist, der je nach Tiefe der Duschtasse in seiner Höhe bemessen ist.

Mitunter ist es erforderlich, an dem Gießkörper eine Öffnung auszubilden, die einen Wasserablauf ermöglicht. Bei einer Küchenspüle bzw. einem Spülbecken ist beispielsweise in Europa gemäß Vorschrift eine Überlauföffnung vorzusehen, damit das in das Spülbecken einströmende Wasser nicht über den Rand der Spüle laufen kann. Mit Erreichen der Überlauföffnung fließt es sukzessive über die Überlauföffnung in den Ablauf. Selbst wenn also der Wasserhahn nicht zugedreht wird, wird hierüber ein Auslaufen und damit eine Überschwemmung vermieden. Das Einbringen einer solche Öffnung, insbesondere einer solchen Überlauföffnung bei einem Spülenbauteil erfolgt bisher mechanisch, indem die Überlauföffnung am fertigen, ausgehärteten Gießkörper durch Bohren oder Fräsen in eine vertikale oder nahezu vertikale Beckenwand eingebracht wird, was sehr aufwendig ist. Die Ausbildung der Überlauföffnung unmittelbar beim Gießen in der Gießform ist nicht möglich, da dies an der Form bzw. den Formflächen zu einem Hinterschnitt führen würde, sodass der Gießkörper nicht mehr entfernt werden kann. Mit Schiebern, wie bei Spritzgussformen, kann in einem solchen Fall nicht gearbeitet werden, da die Methylmethacrylat-Komponente der polymeren Gießmasse sehr dünnflüssig ist und somit in kleinste Spalte läuft und diese verklebt.

Der Erfindung liegt das Problem zugrunde, eine Gießform anzugeben, die das Ausbilden einer Öffnung im Gießkörper, insbesondere einer Überlauföffnung in einem Spülenbauteil, vereinfacht.

Zur Lösung des Problems ist bei einer Gießform der eingangs genannten Art erfindungsgemäß vorgesehen, dass an der Rückseitenformfläche eine erste Befestigungsschnittstelle und an einem Einlegeteil, über das am Gießkörper eine Durchbrechung auszubilden ist, eine zweite Befestigungsschnittstelle vorgesehen ist, wobei das Einlegeteil bei geschlossener Form sowohl an der Rückseitenformfläche als auch an der Vorderseitenformfläche anliegt, und wobei die beiden Befestigungsschnittstellen derart lösbar miteinander verbindbar sind, dass beim Entfernen des zweiten Formteils vom ausgehärteten Gießkörper die erste Befestigungsschnittstelle automatisch von der zweiten Befestigungsschnittstelle gelöst wird.

Die erfindungsgemäße Gießform erlaubt es, unter Verwendung eines Einlegeteils eine nach Entnahme des fertigen Gießkörpers auf äußerst einfache Weise zu realisierende Öffnung auszubilden. Hierzu weist die Rückseitenformfläche des zweiten Formteils eine erste Befestigungsschnittstelle auf. An einem Einlegeteil, das die Geometrie der auszubildenden Öffnung, also beispielsweise der Überlauföffnung im Spülenbauteil, definiert, ist eine zweite Befestigungsschnittstelle vorgesehen. Vor dem Schließen der Gießform wird das Einlegeteil mit seiner zweiten Befestigungsschnittstelle an der ersten Befestigungsschnittstelle fixiert, wobei das Einlegeteil bei geschlossener Form sowohl an der Rückseitenformfläche als auch an der Vorderseitenformfläche anliegt, beide also verbindet. Wird nun die Gießmasse in den Gießhohlraum eingebracht, so steht strömt und verteilt sich die Gießmasse um das Einlegeteil herum, das also in die Gießmasse eingebettet wird. Nach Aushärten der Gießmasse wird sodann die Form geöffnet, wobei das zweite Formteil vom Formkörper entfernt wird. Diese Bewegung führt dazu, dass die zweite Befestigungsschnittstelle des Einlegeteils von der ersten Befestigungsschnittstelle an der Rückseitenformfläche gelöst wird, die Verbindung wird also getrennt. Das fest im Gießkörper eingebettete Einlegeteil verbleibt folglich im Gießkörper. Zum Öffnen der Öffnung im Gießkörper ist anschließend das Einlegeteil lediglich aus dem Gießkörper zu drücken, beispielsweise mit einem geeigneten Werkzeug zu klopfen, wobei mit dem Entfernen des Einlegeteils automatisch die Öffnung, also beispielsweise die Überlauföffnung im Spülenkörper, ausgebildet ist. Die Erfindung lässt also in der Gießform die Ausbildung eines definierten Öffnungsbereichs innerhalb des ausgehärteten Gießkörpers durch Einbetten des Einlegeteils zu, wobei nach dem Entformen das Einlegeteil im Formkörper verbleibt und anschließend lediglich aus diesem z.B. durch einfaches Klopfen zu entfernen ist, unter gleichzeitiger Ausbildung einer exakt geformten Öffnung. Da die Geometrie respektive Randform der Öffnung über das Einlegeteil definiert wird, kann auf einfache Weise die Geometrie je nach Formung des Einlegeteil nahezu beliebig variiert werden. Die Öffnung kann kreisrund sein, sie kann oval sein, drei- oder mehreckig, länglich etc. D. h., dass neben einer einfachen Ausbildung der Öffnung auch eine große Variationsbandbreite hinsichtlich der Öffnungsgeometrie gegeben ist.

Gemäß einer Weiterbildung der Erfindung kann vorgesehen sein, dass die zweite Befestigungsschnittstelle über eine lineare Schiebebewegung in die erste Befestigungsschnittstelle einschiebbar und bei Entfernen des zweiten Formteils die zweite Befestigungsschnittstelle aus der ersten Befestigungsschnittstelle über eine lineare Bewegung herausziehbar ist. Das Einlegeteil wird also am zweiten Formteil über eine einfache Schiebebewegung fixiert, was ein sehr einfaches anordnen des Einlegeteil am zweiten Formteil respektive der Rückseitenformfläche erlaubt. Dieses einfache lineare Verbinden führt gleichzeitig dazu, dass die Verbindung nach Herstellung des Gießkörpers auf entsprechend einfache Weise auch wieder gelöst wird, d. h., dass beim Entfernen des zweiten Formteils die beiden Befestigungsschnittstellen wiederum über eine einfache lineare Bewegung voneinander getrennt werden.

Eine formelhafte Ausgestaltung der Erfindung sieht vor, dass die erste Befestigungsschnittstelle und die zweite Befestigungsschnittstelle eine Klemmverbindung eingehen. Eine solche Klemmverbindung ist bereits ausreichend, für eine sichere Fixierung des Einlegeteils am zweiten Formteil bzw. der Rückseitenformfläche zu sorgen. Durch das einfache Verklemmen ist einerseits die Anordnung des Einlegeteil einfach, insbesondere in Verbindung mit. der einfachen linearen Befestigungsbewegung, zum anderen ist über das Verklemmen eine ausreichende Fixierung gegeben, wenn die Form geschlossen ist, wobei dann das Einlegeteil fest zwischen der Rückseitenformfläche und der Vorderseitenformfläche, an denen es jeweils anliegt, gehaltert ist. Diese Fixierung ist auch ohne weiteres ausreichend, das Einlegeteil während des Gießvorgangs, wenn also die flüssige Gießmasse in den Gießhohlraum eingebracht wird, in Position zu halten.

Eine besonders vorteilhafte Ausgestaltung einer solchen Klemmverbindung kann gemäß einer Weiterbildung der Erfindung dadurch realisiert werden, dass die erste Befestigungsschnittstelle und die zweite Befestigungsschnittstelle eine Schwalbenschwanzverbindung eingehen. Eine Schwalbenschwanzverbindung ist eine formschlüssige Verbindung, die sowohl in Querrichtung als auch in Längsrichtung formschlüssig ist. Der eine Befestigungsabschnitt ist als quasi trapezförmiger Vorsprung ausgebildet, der andere Befestigungsabschnitt als entsprechende formkompatible, trapezförmige Ausnehmung oder Nut, in die der Vorsprung eingeführt wird und in der er formschlüssig aufgenommen ist. Vorliegend ist die eine Befestigungsschnittstelle als längliche Nut und die andere Befestigungsschnittstelle als länglicher Vorsprung ausgebildet, wobei im Rahmen der linearen Fügebewegung der längliche Vorsprung unter formschlüssigem Eingriff der Schwalbenschwanzgeometrie in das Negativ der Nut eingeschoben wird. Besonders bevorzugt nimmt die Breite des Vorsprungs sowie die Breite der Nut vom einen Ende zum anderen Ende hin leicht ab, d. h., dass eine leichte Keilform gegeben ist, über die auf besonders einfache Weise eine Klemmwirkung erreicht werden kann, wenn beide Abschnitte ineinandergeschoben sind. Eine solche sich verändernde Geometrie ist jedoch nicht zwingend erforderlich, vielmehr kann die jeweilige Breite auch konstant bleiben, wobei zur Klemmwirkung beispielsweise ein minimales Übermaß am Vorsprung vorgesehen sein kann.

Um bei einer derartigen Klemmbefestigung, die stets einen gewissen Formschluss voraussetzt, das einfache Lösen der beiden Befestigungsschnittstellen voneinander zu erlauben, ist es zweckmäßig, wenn die erste Befestigungsschnittstelle an einem unter einem Winkel von 0,1° - 7° zu einer linearen Bewegungsachse des zweiten Formteils stehenden Wandabschnitt der Rückseitenformfläche angeordnet ist. Ein solcher geringer Winkel erlaubt auch bei einem entsprechend großflächigen Formschluss, wie er beispielsweise bei einer Schwalbenschwanzverbindung gegeben ist, ein entsprechendes Lösen, wenn das zweite Formteil und der Gießkörper relativ zueinander bewegt werden, damit bereits eine relativ kurze lineare Bewegung zum Öffnen der Befestigungsschnittstellenverbindung ausreichend ist. Insbesondere bei einer Schwalbenschwanzverbindung sollte der Winkel jedoch nicht allzu groß sein, er sollte ca. 5-6° betragen. Ist kein entsprechender Hintergriff, wie bei einer Schwalbenschwanzverbindung der Fall, gegeben, so kann der entsprechende Winkel auch etwas größer sein.

Alternativ zur Klemmverbindung kann die erste Befristungsschnittstelle und die zweite Befestigungsschnittstelle auch eine Rastverbindung miteinander eingehen. Die Klemmverbindung ist insbesondere von Vorteil, wenn die Öffnung an einer Wand des Gießkörpers, die nahezu vertikal verläuft respektive über einen vertikalen Gießhohlraumabschnitt in der Form ausgebildet wird, gebildet werden soll, da sehr einfaches Lösen beim Auseinanderziehen der Formhälften bzw. beim Entformen des Gießkörpers ermöglicht wird. Eine Rastverbindung bietet sich als Alternative zur Ausbildung von Öffnungen an, die beispielsweise im Bereich eines Bodenabschnitts ausgebildet werden soll, der über einen quasi horizontal verlaufenden Abschnitt des Gießhohlraums definiert wird. Da in diesem Fall die Bewegungsachse des zweiten Formteils quasi nahezu senkrecht auf dem gebildeten Bodenabschnitt steht, kann auch eine entsprechende Rastverbindung ausgebildet werden, die beim Bewegen des zweiten Formteils oder Entformen des Gießkörpers zwangsläufig getrennt wird. Mit einem Einlegeteil, das eine Rastverbindung eingeht, kann also beispielsweise eine Bodenablauföffnung an einem Gießkörper ausgebildet werden. Natürlich kann auch in diesem Fall eine entsprechende Klemmverbindung anstelle einer Rastverbindung verwendet werden.

Eine Bodenablauföffnung (horizontal verlaufender Abschnitt des Gießhohlraums, über den der Boden eines Beckens einer Küchenspüle gebildet wird) kann auch erzeugt werden, indem das Einlegeteil mit oder ohne Rast- oder Klemmverbindung auf einen Dorn aufgesteckt oder in eine Vertiefung eingelegt wird, so dass das Einlegeteil quasi senkrecht hzur zur Bewegungsrichtung der zweiten Formhälfte verläuft. Da die Bewegungsrichtung des zweiten Formteils quasi senkrecht zu dem im wesentlichen horizontal verlaufenden Abschnitt der Rückseitenformfläche verläuft, kann beim Entformen das Einlegeteil vom Dorn oder aus der Vertiefung abgezogen und der Gießkörper problemlos entformt werden.

Wird eine Rastverbindung zwischen Einlegeteil und zweiten Formhälfte realisiert, so kann erfindungsgemäß die erste Befestigungsschnittstelle an einem unter einem Winkel von 85°-90° zu einer linearen Bewegungsachse des zweiten Formteils stehenden Wandabschnitt der Rückseitenformfläche angeordnet sein. Der Wandabschnitt bzw. der über ihn begrenzte Gießhohlraumabschnitt bildet also einen nahezu horizontal verlaufenden Teil des Gießkörpers, also beispielsweise einen Beckenboden oder einen Tassenboden, an dem die Öffnung ausgebildet wird.

Gemäß einer Weiterbildung der Erfindung kann vorgesehen sein, dass die zweite Befestigungsschnittstelle beim Schließen der Gießform durch das Anlegen an die erste Formhälfte in eine Endposition in der ersten Befestigungsschnittstelle schiebbar ist. Diese Erfindungsausgestaltung erlaubt es, das Einlegeteil an der ersten Befestigungsschnittstelle manuell zu fixieren, sodass es zwar hält, aber noch nicht gänzlich bis in die Entstellung, also beispielsweise an das Ende der an der Rückseitenformfläche ausgebildeten Nut, geschoben und final verklemmt ist. Diese finale Bewegung in die Endstellung oder Klemmstellung oder, sofern vorgesehen, Raststellung erfolgt durch Interaktion des Einlegeteil mit der ersten Formhälfte bzw. der Vorderseiteiformfläche, gegen die das Einlegeteil läuft, wobei durch den Kontakt das Einlegeteil in die Entstellung geschoben wird.

In einer konkreten Erfindungsausgestaltung kann die erste Befestigungsschnittstelle als Vertiefung in der Rückseitenformfläche und die zweite Befestigungsschnittstelle als Erhebung am Einlegeteil ausgeführt sein. An der Rückseitenformfläche ist also beispielsweise eine beidseits hinterschnittene, sich gegebenenfalls auch verschmälernde Nut als Teil einer Schwalbenschwanzverbindung vorgesehen, die die Vertiefung bildet, während am Einlegeteil ein formkompatibler, länglicher Vorsprung, ebenfalls mit Schwalbenschwanzquerschnitt, als Erhebung ausgebildet ist. Die Ausbildung der an der Rückseitenformfläche vorgesehenen ersten Befestigungsschnittstelle als Vertiefung ist insbesondere dahingehend von Vorteil, als die Gießform auch ohne das Einlegeteil verwendet werden kann. Beispielsweise ist eine Überlauföffnung nur in manchen Ländern bzw. Regionen als zwingend erforderlich vorgesehen, in anderen Ländern bzw. Regionen nicht. Die erfindungsgemäße Gießform kann auch zur Herstellung von Gießkörper respektive Spülkörpern oder Spülbecken ohne Überlauföffnung verwendet werden. Denn wenn, ohne eingesetztes Einlegeteil, der Gießhohlraum mit Gießmasse gefüllt wird, so fühlt sich auch die Vertiefung mit der Gießmasse respektive dem Polymer. An dem fertigen Gießkörper bildet sich an der nicht sichtbaren Rückseite eine entsprechende Erhebung, was aber nicht störend ist. Die Ausbildung der Vertiefung in der Rückseitenformfläche, die beispielsweise mittels einer Nickelschale gebildet ist, die eine Dicke von üblicherweise 2,5 - 5 mm aufweist, ist durch entsprechende Formgebung oder entsprechenden Materialabtrag möglich, die Tiefe der Vertiefung beträgt bevorzugt ca. 2 mm, kann aber auch bei entsprechender Stärke der Nickelschale etwas größer sein.

Das Einlegeteil selbst ist bevorzugt ein Hohlkörper, der einen Boden aufweist, an dem die vorspringende zweite Befestigungsschnittstelle vorgesehen ist. Der Hohlkörper weist eine gewisse Elastizität auf, sodass es insbesondere beim Schließen der Form, wenn das erste Formteil gegen das Einlegeteil läuft, es nicht zu einem Verdrücken der Vorderseitenformfläche, also der dortigen Nickelschale, kommt, da das Einlegeteil, weil als Hohlkörper, der beispielsweise zur Vorderseitenformfläche hin offen ist, ausreichend flexibel bzw. elastisch ist. Natürlich ist auch eine Ausführung als Vollmaterial-Bauteil denkbar, insbesondere wenn das Einlegeteil aus einem hinreichend elastischen bzw. weichen Werkstoff ist. Bevorzugt wird das Einlegeteil als Kunststoffbauteil hergestellt.

Ist das Einlegeteil als Hohlkörper ausgeführt, so kann der Hohlkörper quasi geschlossen sein. Er kann aber auch topfartig sein, und nur einen Boden und eine umlaufende seitliche Wand aufweisen, sodass das Einlegeteil einseitig offen ist. Die Wand kann über mehrere im Inneren verlaufende Stützstege abgestützt sein. Eine dünne Wand des zweckmäßig, um die gewünschte Elastizität und Verformbarkeit, wie oben beschrieben, bereitzustellen.

Wie ausgeführt, liegt das Einlegeteil in der Montagestellung sowohl an der Rückseitenformfläche, an der es befestigt ist, als auch in der Vorderseitenformfläche an. Bevorzugt liegt es an der jeweiligen Fläche in einer Dichtanlage an, d. h., dass ein flüssigkeitsdichter Übergang von der jeweiligen Formfläche respektive Nickelschale zum Einlegeteil gegeben ist. Über diese Dichtanlage wird verhindert, dass die Gießmasse oder eine Gießmassenkomponente, die, wie im Falle einer acrylbasierten Polymermasse üblich, sehr flüssig ist, zwischen Einlegeteil und Formfläche fließen kann. Es kommt dann dazu, dass in den angrenzenden Formflächenbereichen minimal ein Materialunterschuss gegeben ist, was insbesondere an der Vorderseite des fertigen Gießkörpers zu einer optischen Beeinträchtigung, zumeist einer Mattierung oder Farbveränderung, führt, was natürlich nicht gewünscht ist. Ist jedoch eine Dichtanlage insbesondere zur Vorderseitenformfläche, bevorzugt aber natürlich auch zur Rückseitenformfläche gegeben, so kommt es in keinem Bereich zu einem Einfließen.

Um die Dichtanlage zu realisieren, ist am Einlegeteil, bevorzugt beidseitig, jeweils ein randseitig umlaufendes Dichtelement vorgesehen. Ein solches Dichtelement kann beispielsweise als Dichtlippe ausgeführt sein. Beide Dichtelemente können als Dichtlippen ausgeführt sein, wobei insbesondere das an der Vorderseitenformfläche anliegende Dichtelement als flexible Lippe ausgeführt ist, die beim Schließen der Form geringfügig deformiert wird und eine leichte Fase ausbildet, was die Entformung des Einlegeteils aus dem fertigen Gießkörper erleichtert und eine entgratete Kante generiert.

Das Einlegeteil selbst des bevorzugt aus Kunststoff gefertigt. Beispielsweise kann Polypropylen verwendet werden, oder auch ein anderer geeigneter Kunststoff, der eine ausreichende Weichheit bzw. Elastizität aufweist, die sicherstellt, dass beim Schließen der Form eine Beschädigung einer der Formflächen verhindert wird.

In Weiterbildung der Erfindung kann zumindest die zweite Formhälfte eine Heizeinrichtung aufweisen, über die die Rückseitenformfläche erwärmbar ist. Mit dem Erwärmen der Rückseitenformfläche wird auch das Einlegeteil erwärmt, zumindest in dem Bereich, in dem die beiden Befestigungsschnittstellen miteinander verbunden sind. Ist das Einlegeteil, wie beschrieben, aus Kunststoff, so kommt es infolge der Erwärmung zu einer leichten Volumenvergrößerung, d. h., das Einlegeteil weitet sich auch im Bereich der zweiten Befestigungsschnittstelle, was zu einer Verbesserung der Klemmwirkung oder Verrastung mit der ersten Befestigungsschnittstelle führt.

Weitere Vorteile und Einzelheiten der vorliegenden Erfindung ergeben sich aus dem folgenden beschriebenen Ausführungsbeispiel sowie anhand der Zeichnungen. Dabei zeigen:
- Fig. 1: eine Prinzipdarstellung einer erfindungsgemäßen Gießform,
- Fig. 2: eine perspektivische Teilansicht der Gießform aus Fig. 1 in einer Explosionsansicht unter Darstellung zweier Formbauteile in Form von Metalllagen, die die Vorderseite und Rückseite des Gießkörpers ausformen, sowie eines Einlegeteils,
- Fig. 3: eine Aufsicht auf die zusammengesetzten Metalllagen in der geschlossenen Position,
- Fig. 4: eine Schnittansicht entlang der Linie IV-IV in Fig. 3 durch die beiden in der Gießstellung befindlichen Metalllagen mit dazwischen angeordnetem Einlegeteil,
- Fig. 5: eine vergrößerte Detailansicht des Bereichs V in Figur 4,
- Fig. 6: eine Teilansicht der zweiten Metalllage mit Blick auf die Rückseitenformfläche und daran befestigtem Einlegeteil,
- Fig. 7: eine Schnittansicht entlang der Linie VII-VII in Figur 6,
- Fig. 8: eine geschnittene Teilansicht eines fertigen Gießkörpers mit noch darin befindlichem Einlegeteil, und
- Fig. 9: der Gießkörper aus Fig. 8 nach Entfernen des Einlegeteils.

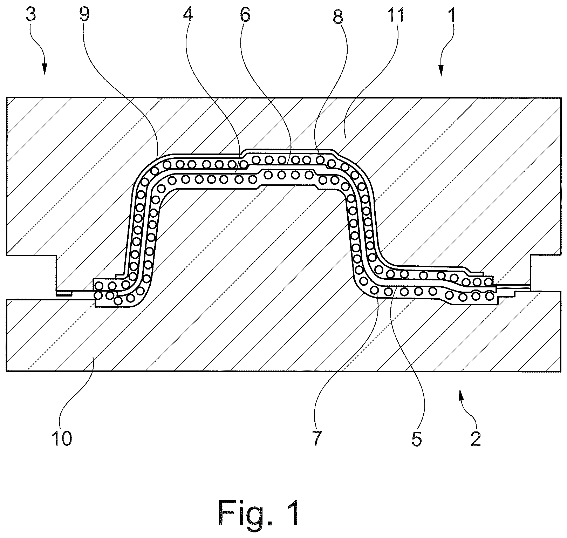

Fig. 1 zeigt eine Prinzipdarstellung einer erfindungsgemäßen Gießform 1, die zur Herstellung eines eine Vorder- und eine Rückseite aufweisenden Gießkörpers in Form einer aus einem Komposit-Werkstoff bestehenden Küchenspüle dient. Die Gießform umfasst ein erstes Formteil 2, das der Ausformung respektive Definition der Vorderseite des herzustellenden Gießkörpers dient, sowie ein zweites Formteil 3, das der Ausformung respektive Definition der Rückseite des herzustellenden Gießkörpers dient. Beide Formteile liegen randseitig aneinander und begrenzen einen Gießhohlraum 4, in den eine Gießmasse bestehend aus einer aushärtbaren Polymermasse, also einer Reaktionsmasse, in die partikuläre Füllstoffe wie beispielsweise wie Quarzsand und Ähnliches eingebracht sind. Während das erste Formteil 2 regelmäßig positionsfest ist, kann das zweite Formteil 3 vertikal bewegt werden, also zum Schließen des Gießhohlraums 4 auf das untere erste Formteil 2 aufgesetzt werden.

Der Gießhohlraum 4 selbst wird durch eine erste Metalllage 5, die am ersten Formteil 2 angeordnet ist, sowie eine zweite Metalllage 6, die am zweiten Formteil 3 angeordnet ist, begrenzt. Mit diesen beiden Metalllagen 5, 6 kommt die eingebrachte Gießmasse in Verbindung, liegt also flächig an diesen beiden Metalllagen 5, 6 an. Dabei ist an der Rückseite der ersten Metalllage 5 eine erste Heizeinrichtung 7, die die Rückseite der ersten Metalllage 5 nahezu vollflächig belegt, angeordnet. Über diese Heizeinrichtung 7 kann die Temperierung der ersten Metalllage 5 und über diese die Erwärmung der Gießmasse von der Vorderseite her erfolgen. Auch das zweite Formteil 3 weist eine zweite Heizeinrichtung 8 auf, die an der Rückseite der zweiten Metalllage 6, diese letztlich vollflächig belegend, angeordnet ist. Über die zweite Heizeinrichtung 8 kann die zweite Metalllage 6 und über sie die Gießmasse temperiert werden, mithin also der Wärmeeintrag von der Rückseite her in die Gießmasse gesteuert werden. Der zweiten Heizeinrichtung 8 folgt optional eine elastische und komprimierbare Zwischenlage 9, bevorzugt aus einem Moosgummi, welche damit ein Rückstellmittel oder Rückstellelement darstellt, über das eine gewisse Beweglichkeit der zweiten Metalllage 6 ermöglicht wird und gleichzeitig sichergestellt wird, dass die zweite Metalllage 6 in eine definierte Ausgangsposition wieder zurückgeführt werden kann, um einen etwaigen Schwund der Polymer-Gießmasse auszugleichen. Bei den beiden Metalllagen 5, 6 handele sich bevorzugt um Nickellagen bzw. Nickelschalen, wobei die Metalllage 5 als Sichtseitenschale, weil die Sichtfläche des Gießkörpers respektive der Küchenspüle bildend, und die Metalllage 6 als Rückseitenschale, weil die Rückseite des Gießkörpers bzw. der Küchenspüle bildend, bezeichnet werden kann. Die Zwischenlage 9 ist wie ausgeführt nicht zwingend vorzusehen. In einem solchen Fall kann der Schwundausgleich über eine Relativbewegung der beiden Formteile 2, 3 zueinander kompensiert werden.

Weiterhin weist das erste Formteil 2 einen ersten Formteilträger 10 auf, an dem wiederrum die erste Heizeinrichtung 7 anliegt. Auch das zweite Formteil 3 weist einen zweiten Formteilträger 11 auf, an dem die elastische, komprimierbare Zwischenlage 9 anliegt. Beide Formteilträger 10, 11 sind bevorzugt zumindest abschnittsweise, soweit die Metalllagen daran abgestützt sind, aus einem Polymerbeton.

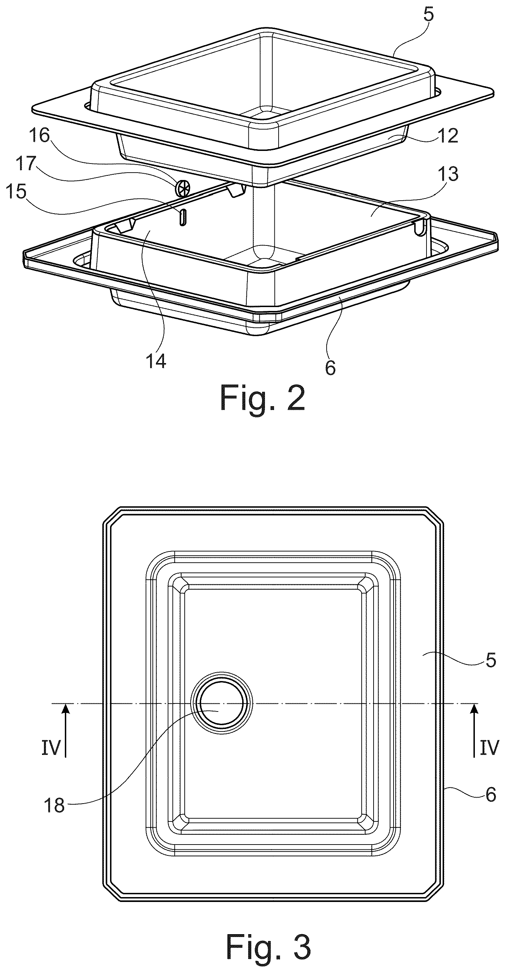

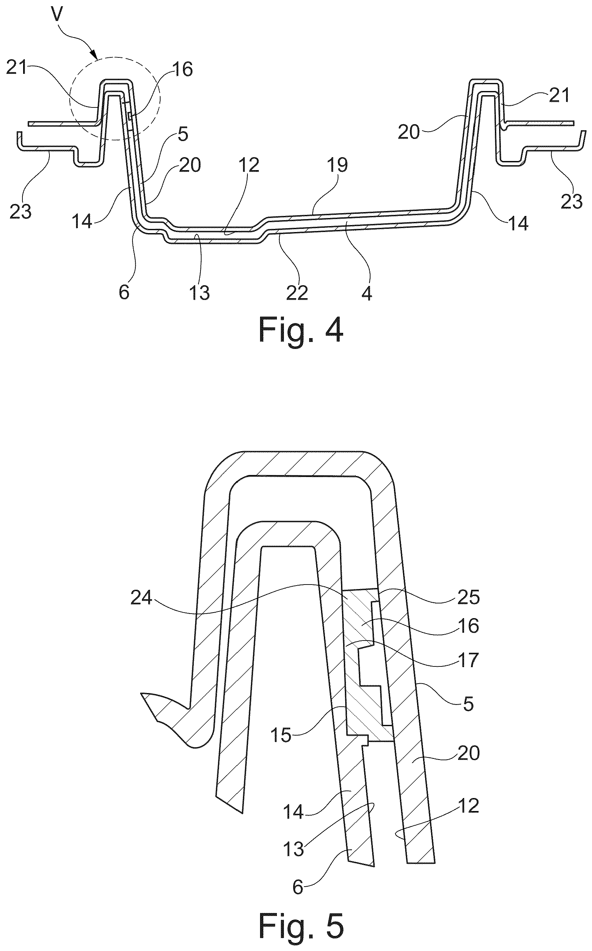

Fig. 2 zeigt in einer Explosionsdarstellung die erste Metalllage 5 und die zweite Metalllage 6, wobei die erste Metalllage 5 ein Formbauteil der ersten Formhälfte 2 und die Metalllage 6 ein Formbauteil der zweiten Formhälfte 3 darstellt. Verglichen mit Fig. 1 sind hier aus Übersichtlichkeitsgründen die beiden Metalllagen 5, 6 in umgekehrter Anordnung gezeigt, ausgehend von Fig. 1 wäre die erste Metalllage 5 unten und die zweite Metalllage 6 oben (dies gilt auch für die Darstellungen in den Fig. 4 und 5). Die erste Metalllage 5 dient der Ausbildung einer Vorderseite des fertigen Gießkörpers, weshalb die erste Metalllage 5 eine Vorderseitenformfläche 12 aufweist. Die zweite Metalllage 6 dient der Ausbildung der Rückseite des Gießkörpers, deshalb die zweite Metalllage 6 eine Rückseitenformfläche 13 aufweist. Da die gezeigte Gießform 1 der Herstellung einer Küchenspüle dient, die einen Beckenabschnitt aufweist, greift die erste Metalllage 5 beim Fügen der beiden Formhälften 2, 3 und damit der Metalllagen 5, 6 in die zweite Metalllage 6 ein, sodass sich der in Fig. 1 gezeigte Gießhohlraum 4, der ersichtlich eine Beckenform aufweist, ausbildet.

Das gebildete Becken weist eine quasi rechteckige Form auf, mit einem Boden und vier umlaufenden Seitenwänden. Dementsprechend weisen auch die beiden Metalllagen 5, 6 einen entsprechenden Bodenabschnitt sowie entsprechende Wandabschnitte auf. An einem Wandabschnitt 14 der zweiten Metalllage 6 ist an der Innenseite, also der Rückseitenformfläche 13, eine erste Befestigungsschnittstelle 15 ausgebildet, die in Form einer länglichen, beidseits hinterschnittenen Nut, die der Bildung einer Schwalbenschwanzverbindung dient, ausgeführt ist. Sie dient der Befestigung eines Einlegeteils 16, das an seiner Rückseite eine zweite Befestigungsschnittstelle 17 aufweist, die als zur Nutgeometrie formkompatibler, länglicher Vorsprung ausgeführt ist, sodass diese zweite Befestigungsschnittstelle 17 über eine lineare einer Schiebebewegung in die erste Schnittstelle 15 einschiebbar ist und sich eine formschlüssige

Schwalbenschwanzverbindung ergibt. In der finalen eingeschobenen Entstellung ist eine leichte Klemmverbindung gegeben, sodass das Einlegeteil 16 vor dem Schließen der Form entsprechend sicher fixiert ist. Über das Einlegeteil 16 wird im fertigen, ausgehärteten Gießkörper eine Öffnung definiert, die über das Einlegeteil 16 noch geschlossen ist, durch einfaches Herausdrücken des Einlegeteils 16 aber geöffnet werden kann. Diese Öffnung bildet eine Überlauföffnung des fertigen Gießkörpers und befindet sich an einer nahezu vertikal verlaufenden Wand (die Wand kann unter einem kleinen Entformungswinkel von 4°-6° zur Vertikalen stehen) des Gießkörpers, die über zwei benachbarte Wandabschnitte der Rückseitenformfläche 13 und der Vorderseitenformfläche 12 definiert wird.

Fig. 3 zeigt die beiden Metalllagen 5, 6 in ihrer Fügestellung, d. h., dass die beiden Metalllagen ineinandergreifen und relativ zueinander positioniert und festgelegt sind, sodass sich der in Fig. 1 gezeigte Gießhohlraum 4 ausbildet. Fig. 3 zeigt eine Aufsicht auf die Anordnung, d. h., dass von oben die erste Metalllage 5 zu sehen ist, die in die nicht näher sichtbare zweite Metalllage 6, von der nur der umlaufende Rand gezeigt ist, eingreift. Gezeigt ist ein Formabschnitt 18, der am fertigen Gießkörper der Ausbildung einer Ablauföffnung im Boden des Gießkörpers dient.

Fig. 4 zeigt eine Schnittansicht entlang der Linie IV-IV in Fig. 3. Sie zeigt die beiden Metalllagen 5, 6 in der Position, die sie zueinander einnehmen, wenn die beiden Formhälften 2, 3 geschlossen sind. Ersichtlich ist der Gießhohlraum 4, der durch die voneinander beabstandeten Metalllagen 5, 6 allseits begrenzt wird. Die Metalllage 5 weist zur Begrenzung einen Bodenabschnitt 19 sowie unter einem Winkel von wenig mehr als 90° zum Boden 19 verlaufende Wandabschnitte 20 auf, an die sich zur Seite abragende Formabschnitte 21 anschließen. Die untere, die Rückseite ausbildende Metalllage 6 weist ebenfalls einen Bodenabschnitt 22 sowie unter einem Winkel von wenig mehr als 90° dazu verlaufend die Wandabschnitte 14 auf, woran die sich ebenfalls entsprechende Formabschnitte 23, die zur Seite hin abgehen, anschließen. Ersichtlich sind die Bodenabschnitte 19, 22 sowie die Wandabschnitte 20, 14 zur Bildung des Gießhohlraums 4 geringfügig voneinander beabstandeten. Die Metalllage 5 weist an der zu Metalllage 6 weisenden Seite die Vorderseitenformfläche 12 auf, während die Metalllage 6 an der zur Metalllage 5 weisenden Seite die Rückseitenformfläche 13 aufweist.

Zwischen zwei benachbarten Wandabschnitten 14, 20 ist das Einlegeteil 16 angeordnet, das an dem Wandabschnitt 14 und dort an dessen Rückseitenformfläche 13 angeordnet ist und in Dichtanlage an der Rückseitenformfläche 13 des Wandabschnitt 14 anliegt. An der anderen Seite ist eine Dichtanlage an der Vorderseitenformfläche 12 bzw. dem benachbarten Wandabschnitt 20 gegeben. Die Anordnung ist in einer vergrößerten Ansicht gemäß Fig. 5 gezeigt.

Fig. 5 zeigt in einer vergrößerten Ansicht den Bereich V aus Fig. 4. Gezeigt ist ausschnittsweise der Wandabschnitt 14 der Metalllage 6 sowie der benachbarte Wandabschnitt 20 der Metalllage 5. Die entsprechende Vorderseitenformfläche 12 liegt benachbart zur Rückseitenformfläche 13. An der Rückseitenformfläche 13 des Wandabschnitts 14 ist die erste Befestigungsschnittstelle 15 in Form der bereits beschriebenen, länglichen Nut ausgebildet, während an der Rückseite des Einlegeteils 16 die zweite Befestigungsschnittstelle 17 Form des länglichen, formkompatiblen und in die Nut eingreifenden Vorsprungs ausgebildet ist. Wie bereits Fig. 2 andeutet, wird die zweite Befestigungsschnittstelle 17 in Form des Vorsprungs durch eine lineare, nahezu vertikale oder unter einem kleinen Winkel verlaufende Einschiebebewegung in die erste Schnittstelle 15 eingeführt, in der sie vorzugsweise leicht klemmend aufgenommen ist, sodass sie eine Klemmverbindung ergibt. Das Einlegeteil 17 liegt in einer Dichtanlage an der Rückseitenformfläche 13 an, wozu an der zu Rückseitenformfläche 13 weisenden Rückseite des Einlegeteils 17 ein umlaufendes Dichtelement 24 angeordnet ist. Das Einlegeteil 17 selbst aus Kunststoff gefertigt, sodass auch das Dichtelement 24 aus Kunststoff ist, beispielsweise aus einem etwas weicheren Kunststoff als der restliche Körper des Einlegeteils 16, was in einem 2K-Spritzverfahren realisierbar ist. An der anderen Seite weist das Einlegeteil 16 ein weiteres umlaufendes Dichtelement 25, hier in Form einer vorspringenden Dichtlippe auf, die an der Vorderseitenformfläche 12 anliegt und von dieser gegebenenfalls leicht verformt wird. Auch dieses Dichtelement 25 kann aus einem etwas weicheren Kunststoff als der sonstige Körper des Einlegeteil 16 sein und im 2 K-Spritzverfahren angeformt sein. Ist das Einlegeteil 16 insgesamt aus einem hinreichend elastischen oder flexiblen und weichen Kunststoff gefertigt, beispielsweise Polypropylen, so können die Dichtelemente 24, 25 aus unmittelbar aus diesem Kunststoff gebildet werden. Das Dichtelement 24 kann ein einfacher umlaufende Ringvorsprungs sein, der nicht unbedingt als Dichtlippe ausgeführt sein muss, während es sich bei dem zweiten Dichtelement bevorzugt um eine vorspringend umlaufende Dichtlippe handelt.

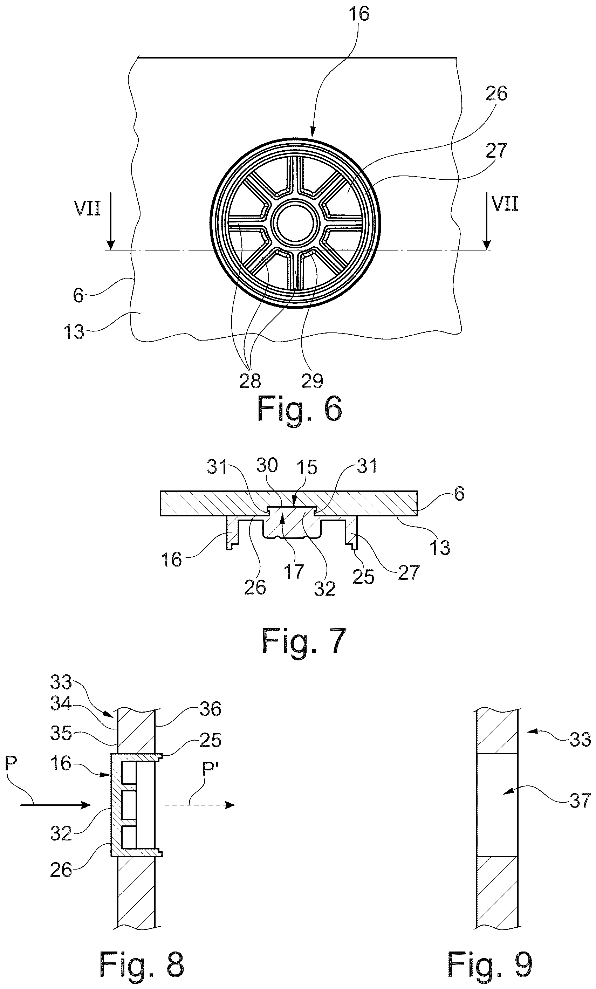

Fig. 6 zeigt eine Aufsicht auf die Rückseitenformfläche 13 der zweiten Metalllage 6 sowie das an ihr befestigte Einlegeteil 16. Dieses ist als Hohlkörper ausgeführt, der einen Boden 26 aufweist, an dessen Rückseite wie ausgeführt das Dichtelement 24 angeformt ist. Das Einlegeteil 16 ist als kreisförmiges Bauteil ausgeführt, sodass sich eine kreisrunde umlaufende Wand 27 vom Boden 26 erstreckt. Über diverse Stege 28 sowie einen mittleren Ringsteg 29 ist eine entsprechende Aussteifung gegeben. Zur gegenüberliegenden Vorderseitenformfläche 12 ist das Einlegeteil 16 hin offen.

Fig. 7 zeigt eine Schnittansicht entlang der Linie VII-VII aus Fig. 6. Gezeigt ist die Metalllage 6 mit ihrer Rückseitenformfläche 13, an der die erste Befestigungsschnittstelle 15 ausgebildet ist. Diese ist in Form einer Nut 30 ausgeführt, die sich, siehe Fig. 2, quasi vertikal oder unter einem kleinen Winkel entlang des Wandabschnitts 14 erstreckt und über beidseitige in der Hinterschneidungen 31 nach Art eines Schwalbenschwanzes ausgeführt ist. Über ihre Länge kann sich die Breite der Nut 30 geringfügig verschmälert, sodass eine Art Keilform gebildet ist.

Gezeigt ist ferner das Einlegeteil 16, an dessen Rückseite des Bodens 26 die zweite Befestigungsschnittstelle 17 in Form eines länglichen Vorsprungs 32, der beidseits auskragt, ausgebildet ist. Der Querschnitt ist formkompatibel mit dem Querschnitt der Nut 30, ebenso verschmälert sich die Breite des Vorsprungs 32 über seine Länge, der Form der Nut 30 folgend. Zur Montage wird der Vorsprung 32, ausgehend von Fig. 2, von oben in die Nut 30 geschoben, beispielsweise bis in die finale Entstellung, in der er maximal in die Nut 30 eingeschoben ist und darin verklemmt ist. Die Verklemmung wird durch die sich verschmälernden Geometrien sichergestellt. Alternativ ist es denkbar, dass das Einlegeteil 16 bzw. der Vorsprung 32 nur abschnittsweise in die Nut 30 geschoben wird, bis eine leichte Klemmwirkung gegeben ist, sich der Vorsprungs 32 aber nicht in der finalen maximalen Endposition befindet. Wird die Form geschlossen, wird also das zweite Formteil 3 respektive die zweite Metalllage 6 gegen die erste Metalllage 5 bewegt, so gelangt die Vorderseitenformfläche 12 in Anlage an das Einlegeteil 16 bzw. das Dichtelement 25. Durch diese Anlage wird das Einlegeteil 16 noch etwas weiter linear bewegt und in die finale Entstellung in der Nut 30 geschoben, wobei gleichzeitig eine Dichtanlage des Einlegeteils 16 sowohl zur Vorderseitenformfläche 12 über das Dichtelement 25 als auch zu Rückseitenformfläche 13 über das Dichtelement 24 realisiert ist.

Nach Schließen der Form ist auch der Gießhohlraum 4 geschlossen, bis auf einen Materialzugang, über den die Gießmasse in den Gießhohlraum 4 eingebracht wird. Die Gießmasse verteilt sich vollständig im Gießhohlraum 4, Sie umströmt dabei das Einlegeteil 16, das wie ausgeführt in Dichtanlage sowohl zu Rückseitenformfläche 13 als auch zur Vorderseitenformfläche 12 liegt. Diese Dichtanlage verhindert, dass der flüssige Anteil der Gießmasse zwischen das Einlegeteil 16 und eine der Formflächen 12, 13 gelangen kann. Es wird also vollständig in die Gießmasse eingebettet. Sodann härtet die Gießmasse aus, was bei einer warmhärtenden Gießmasse thermisch durch Erwärmen der beiden Metalllagen 5, 6 über die entsprechenden Heizeinrichtungen 7, 8 initiiert wird. Durch dieses Erwärmen erwärmt sich neben der Metalllage 6 auch zumindest der Vorsprung 32 des Einlegeteils 16 etwas. Da dieser aus Kunststoff gefertigt ist, weitet er sich geringfügig, worüber die Klemmverbindung noch weiter verbessert wird. Alternativ kann die Aushärtung auch ohne Erwärmung durch Zugabe von speziellen Peroxiden erfolgen, d.h., dass eine kalthärtende Gießmasse verwendet wird.

Ist die Gießmasse ausgehärtet, also der Gießkörper gebildet, wird die Gießform 1 geöffnet. Hierbei werden die beiden Formhälften 2, 3 auseinander bewegt, wobei vorliegend die obere zweite Formhälfte 3 vertikal nach oben bewegt wird. Der Gießkörper kann nun von der unteren Formhälfte 2 entnommen werden. Da das Einlegeteil 16 fest in dem Gießkörper eingebettet ist, wird es beim Entfernen zwangsläufig mitgenommen, wobei die beiden Befestigungsschnittstellen 15, 17 voneinander gelöst werden, d. h., dass der Vorsprung 32 aus der Nut 30 wieder in entgegengesetzter Richtung zu seiner Einschieberichtung gezogen wird. Um nun die finale Öffnung am Gießkörper selbst auszubilden, ist es lediglich noch erforderlich, das Einlegeteil 16 aus dem Gießkörper respektive der fertigen Wand herauszudrücken. Dies ist insbesondere dann besonders einfach möglich, wenn die polymere Gießmasse keine allzu feste Haftung zum Einlegeteil besitzt, sodass das Herausdrücken mit wenig Kraftaufwand möglich ist.

Dies ist in den Fig. 8 und 9 gezeigt. Fig. 8 zeigt den entfernten Gießkörper 33, wobei in einer Beckenwand 34 das darin eingebettete Einlegeteil 16 aufgenommen ist und zusammen mit dem Gießkörper 33 entfernt wurde. Der Gießkörper 33 weist eine Rückseite 35 und eine Vorderseite 36 auf. An der Rückseite 35 ragt der Vorsprung 32 geringfügig hervor, während an der Vorderseite das Dichtelement 25, also die Dichtlippe, geringfügig vorspringend. Zum Ausbilden der Öffnung ist nun mit geringem Kraftaufwand, siehe den Pfeil P, z.B. auf den Boden 26 des Einlegeteils 16 zudrücken, sodass das Einlegeteil 16, wie durch den gestrichelten Pfeil P' gezeigt, zur Seite hin ausgedrückt wird. Natürlich kann das Herausdrücken auch entgegengesetzt zur Rückseite hin erfolgen.

Der fertige Gießkörper 33 mit der ausgebildeten Öffnung 37 ist sodann in Fig. 9 gezeigt, wobei es sich bei der Öffnung 37 um eine Überlauföffnung und bei dem Gießkörper 33 um eine Küchenspüle handelt und die Beckenwand 34 das Spülbecken seitlich begrenzt.

Das Ausbilden der Befestigungsschnittstelle 15 als Nut 30 an der Rückseitenformfläche 13 ist auch dahingehend von Vorteil, als die erfindungsgemäße Gießform 1 auch ohne Einlegeteil 16 verwendet werden kann. Mitunter ist die Ausbildung einer solchen Überlauföffnung an einem Spülenkörper nicht erforderlich. Es bedarf dann des Einsatzes eines Einlegeteil 16 zwangsläufig nicht, gleichwohl kann die Gießform 1 verwendet werden. Denn in diesem Fall strömt die Gießmasse auch in die Nut 30 ein, sodass sich an der Rückseite des fertigen Gießkörpers ein entsprechender, der Nutgeometrie folgender Vorsprung ausbildet. Beim Entformen des Gießkörpers aus der unteren Formhälfte respektive der Metalllage 6 durch vertikales Anheben wird dieser am Gießkörper ausgebildete Vorsprung zwangsläufig linear aus der Nut 30 geschoben. Da er an der Rückseite ist, stört er nicht.

Während Fig. 6 ein Einlegeteil 16 in kreisrunder Form zeigt, das zur Ausbildung eines runden Überlauflochs führt, kann natürlich die Form des Einlegeteils 16 beliebig sein. Es kann oval, mehreckig, sternförmig, herzförmig, länglichschlitzartig und Ähnliches sein, letztlich ist der konkreten Geometrie kaum eine Grenze gesetzt, da die Form der Öffnung durch die Randgeometrie der Wand 27 des Einlegeteil 16 definiert wird.

Natürlich ist es denkbar, je nach herzustellendem Gießkörper nicht nur eine Öffnung auszubilden, sondern beispielsweise zwei oder mehr, z.B. bei einem entsprechend großen Spülenkörper oder Waschbecken o.dgl. In diesem Fall wäre an der Rückseitenformfläche 13 eine entsprechende Mehrzahl an Befestigungsschnittstelle in 15 vorzusehen, die die Anordnung entsprechend mehrerer Einlegeteile 16, die von der Geometrie her gleich oder unterschiedlich sein können, erlauben. Stets gleich ist jedoch die Geometrie der jeweilige Befestigungsschnittstellen 15, 17.

Anstelle des exemplarisch beschriebenen Küchenspüle kann als Gießkörper natürlich auch ein andersartiger Körper hergestellt werden, wie z.B. eine Duschtasse oder Duschwanne, ein Waschbecken oder dergleichen.

## Patentansprüche

1. Gießform zur Herstellung eines eine Vorder- und eine Rückseite (35, 36) aufweisenden Gießkörpers (33)aus einer aushärtbaren Gießmasse, mit zumindest einem ersten Formteil (2) mit einer die Vorderseite (36) formenden Vorderseitenformfläche (12) und einem zweiten Formteil (3) mit einer die Rückseite (35) formenden Rückseitenformfläche (13), die zusammen einen Gießhohlraum (4) begrenzen, **dadurch gekennzeichnet, dass** an der Rückseitenformfläche (13) eine erste Befestigungsschnittstelle (15) und an einem Einlegeteil (16), über das am Gießkörper (33) eine Durchbrechung (37) auszubilden ist, eine zweite Befestigungsschnittstelle (17) vorgesehen ist, wobei das Einlegeteil (16) bei geschlossener Form sowohl an der Rückseitenformfläche (13) als auch an der Vorderseitenformfläche (12) anliegt, und wobei die beiden Befestigungsschnittstellen (15, 17) derart lösbar miteinander verbindbar sind, dass beim Entfernen des zweiten Formteils (3) vom ausgehärteten Gießkörper (33) die erste Befestigungsschnittstelle (15) automatisch von der zweiten Befestigungsschnittstelle (17) gelöst wird.

2. Gießform nach Anspruch 1, **dadurch gekennzeichnet, dass** die zweite Befestigungsschnittstelle (17) über eine lineare Schiebebewegung in die erste Befestigungsschnittstelle (15) einschiebbar und bei Entfernen des zweiten Formteils (3) die zweite Befestigungsschnittstelle (17) aus der ersten Befestigungsschnittstelle (15) über eine lineare Bewegung herausziehbar ist.

3. Gießform nach Anspruch 2, **dadurch gekennzeichnet, dass** die erste Befestigungsschnittstelle (15) und die zweite Befestigungsschnittstelle (17) eine Klemmverbindung eingehen.

4. Gießform nach Anspruch 3, **dadurch gekennzeichnet, dass** die erste Befestigungsschnittstelle (15) und die zweite Befestigungsschnittstelle (17) eine Schwalbenschwanzverbindung eingehen.

5. Gießform nach einem der Ansprüche 2 bis 4, **dadurch gekennzeichnet, dass** die erste Befestigungsschnittstelle (15) an einer unter einem Winkel von 0,1° - 7° zu einer linearen Bewegungsachse des zweiten Formteils (3) stehenden Wandabschnitt (14) der Rückseitenformfläche (13) angeordnet ist.

6. Gießform nach Anspruch 2, **dadurch gekennzeichnet, dass** die erste Befestigungsschnittstelle (15) und die zweite Befestigungsschnittstelle (17) eine Rastverbindung eingehen.

7. Gießform nach Anspruch 6, **dadurch gekennzeichnet, dass** die erste Befestigungsschnittstelle (15) an einem unter einem Winkel von 85° - 90° zu einer linearen Bewegungsachse des zweiten Formteils (3) stehenden Wandabschnitt der Rückseitenformfläche (13) angeordnet ist.

8. Gießform nach einem der Ansprüche 2 bis 7, **dadurch gekennzeichnet, dass** die zweite Befestigungsschnittstelle (17) beim Schließen der Gießform (1) durch das Anlegen an die Vorderseiteiformfläche (12) in eine Endposition in der ersten Befestigungsschnittstelle (15) schiebbar ist.

9. Gießform nach einem der Ansprüche 1 bis 3 oder 6, **dadurch gekennzeichnet, dass** das Einlegeteil auf einen Dorn oder in eine Vertiefung, der oder die an einem im wesentlichen horizontal verlaufenden Abschnitt der Rückseitenformfläche vorgesehen ist, angeordnet ist.

10. Gießform nach einem der vorangehenden Ansprüche, **dadurch gekennzeichnet, dass** die erste Befestigungsschnittstelle (15) als Vertiefung in der Rückseitenformfläche (13) und die zweite Befestigungsschnittstelle (17) als Erhebung am Einlegeteil (16) ausgeführt ist.

11. Gießform nach Anspruch 10, **dadurch gekennzeichnet, dass** das Einlegeteil (16) ein Hohlkörper ist und einen Boden (26) aufweist, an dem die vorspringende zweite Befestigungsschnittstelle (17) vorgesehen ist.

12. Gießform nach Anspruch 11, **dadurch gekennzeichnet, dass** das einseitig offene Einlegeteil (16) eine umlaufende seitliche Wand (27) aufweist, die über mehrere im Inneren verlaufende Stützstege (28, 29) abgestützt ist.

13. Gießform nach einem der vorangehenden Ansprüche, **dadurch gekennzeichnet, dass** das Einlegeteil (16) in einer Dichtanlage sowohl an der Rückseitenformfläche (13) als auch an der Vorderseitenformfläche (12) anliegt.

14. Gießform nach Anspruch 13, **dadurch gekennzeichnet, dass** am Einlegeteil (16) beidseits jeweils ein randseitig umlaufendes Dichtelement (24, 25) vorgesehen ist.

15. Gießform nach Anspruch 14, **dadurch gekennzeichnet, dass** ein Dichtelement (24, 25) als Dichtlippe ausgeführt ist.

16. Gießform nach einem der vorangehenden Ansprüche, **dadurch gekennzeichnet, dass** das Einlegeteil (16) aus Kunststoff ist.

17. Gießform nach einem der vorangehenden Ansprüche, **dadurch gekennzeichnet, dass** zumindest die zweite Formhälfte (3) eine Heizeinrichtung (8) aufweist, über die die Rückseitenformfläche (13) erwärmbar ist.
